# EUROPÄISCHE PATENTSCHRIFT

(11) **EP 4 359 737 B1**
(45) Veröffentlichungstag und Bekanntmachung des Hinweises auf die Patenterteilung: **30.04.2025**
(21) Anmeldenummer: 21737031.1
(22) Anmeldetag: 24.06.2021
(51) Int. Cl.: G01F 1/32, G01F 15/14

(54) **STRÖMUNGSMESSER**
FLOWMETER
DÉBITMÈTRE

(43) Veröffentlichungstag der Anmeldung: 01.05.2024
(73) Patentinhaber: SIKA Dr.Siebert & Kühn GmbH & Co. KG., 34260 Kaufungen (DE)
(72) Erfinder: ZANDER, Stefan, 34125 Kassel (DE); SCHMIDT, Sergius, 34128 Kassel (DE); BLEICHERT, Bastian, 34260 Kaufungen (DE)
(74) Vertreter: Walther Bayer Faber Patentanwälte PartGmbB
(86) Internationale Anmeldenummer: PCT/EP2021/067408
(87) Internationale Veröffentlichungsnummer: WO 2022/268330

(56) Entgegenhaltungen:
- EP-A1- 3 594 634
- CN-U- 204 330 032
- DE-A1- 102018 101 278
- JP-A- 2004 191 173
- JP-A- 2006 098 318

## Beschreibung

Die Erfindung betrifft einen Strömungsmesser zur Messung der Fließgeschwindigkeit eines Fluids, mit einem Messrohr, das einen mit dem Fluid durchströmbaren Messraum bildet und mit wenigstens einem Störkörper, der im Messraum angeordnet ist, und wobei im Messraum stromabwärts des Störkörpers weiterhin ein Messwertaufnehmer angeordnet ist, der aufgrund einer Wirbelbildung am Störkörper bei Umströmung mit dem Fluid auslenkbar ist, wobei das Messrohr wenigstens im Bereich der Anordnung des Störkörpers einen elliptischen Querschnitt aufweist.

### STAND DER TECHNIK

Strömungsmesser der hier interessierenden Art werden auch als Wirbelstromsensoren bezeichnet und finden breiten Einsatz in der Durchflussmessung von Fluiden, insbesondere von Flüssigkeiten. Sie zeichnen sich durch hohe Zuverlässigkeit und geringe Herstellungskosten aus. Aufgrund der für die Messung notwendigen Wirbelbildung im Fluid liegt der Nachteil jedoch in einem vergleichsweise hohen Druckverlust bei der Durchströmung mit dem Fluid, mit dem ein Energieverlust im Fluidsystem einhergeht, in das der Strömungsmesser integriert ist.

Zur Minimierung des Druckverlustes sind mehrere Ansätze bekannt, beispielsweise kann gemäß einem ersten Ansatz durch die optimierte Geometrie des Störkörpers der Druckverlust minimiert werden. Somit ist mittlerweile eine Vielzahl von Störkörpergeometrien bekannt, die von den Standardformen eines Zylinderkörpers oder eines Delta-Störkörpers abweichen.

Ein weiterer Ansatz, den Druckverlust zu reduzieren, besteht in der Minimierung des Querschnittes des Messrohres im Bereich des Staukörpers, sodass Strömungsmesser bekannt sind, die einen sich bis zum Störkörper verjüngenden Messraum aufweisen, der sich stromabwärts des Störkörpers wieder aufweitet. Im Ergebnis ist dabei auch der Messquerschnitt kleiner als etwa der Nenndurchmesser der Anschlüsse des Strömungsmessers. Somit wird versucht, den notwendigen Messquerschnitt auf einen möglichst kleinen Raum zu begrenzen, um so den Gesamtdruckverlust zu minimieren. In der vorliegenden Beschreibung bezeichnen Querschnitte des Messraumes bzw. des Messrohres immer solche Querschnitte, auf deren Querschnittsfläche die Strömungsachse eine Flächennormale bildet, dieses also senkrecht auf der Querschnittsfläche steht.

Ein dritter Ansatz besteht darin, die Dimensionierung zwischen dem Störkörper und dem Strömungsquerschnitt zu optimieren. Hierzu kann der Druckverlust im Messwert zunächst getrennt vom Druckverlust des Störkörpers betrachtet werden. Für einen definierten Volumenstrom gilt dann für das Messrohr, dass mit kleinerem Querschnitt der Druckverlust ansteigt. Für den Störkörper gilt, dass mit größerer Anströmfläche der Druckverlust ebenfalls ansteigt. Bei der Bestimmung der Verhältnisse zwischen dem Querschnitt des Messrohres und der Dimensionierung des Störkörpers kann gemäß dem dritten Ansatz ebenfalls ein Optimum gesucht werden.

Beispielsweise beschreibt die DE 10 2018 101 278 A1 einen Strömungsmesser zum Messen der Fließgeschwindigkeit eines Fluids, mit einem Messrohr, das einen mit dem Fluid durchströmbaren Messraum bildet und mit wenigstens einem Störkörper, der im Messraum angeordnet ist, und wobei im Messraum stromabwärts des Störkörpers weiterhin ein Messwertaufnehmer angeordnet ist, der aufgrund einer Wirbelbildung am Störkörper bei Umströmung mit dem Fluid auslenkbar ist. Zur Optimierung der Wirbelbildung ist vorgesehen, dass stromaufwärts des Störkörpers an einer den Messraum begrenzenden Innenwand wenigstens ein in den Messraum hinein ragender Vorsprung ausgebildet ist. Dadurch können die Wirbel, die sich am Störkörper bilden, verstärkt werden, sodass bei insgesamt niedrigem Druckverlust ein vergleichsweise hoher Spannungspegel über den Messwertaufnehmer ausgegeben werden kann.

Die Geometrie des Staukörpers wirkt sich hauptsächlich auf zwei strömungsmechanische Eigenschaften aus, die in einem Wirbelstromsensor von Bedeutung sind. Eine dieser Eigenschaften ist der Druckverlust, welcher z.B. bei bezogen auf die Anströmfläche zylindrischen Geometrien vergleichsweise gering ausfällt. Die andere gewünschte Eigenschaft ist eine möglichst konstante Strouhalzahl über weite Bereiche der Reynoldszahl. Dadurch wird erreicht, dass die Wirbelfrequenz als primäre Messgröße ein lineares Verhältnis zur daraus berechneten Größe der Strömungsgeschwindigkeit aufweist. Im Gegensatz zum zylindrischen Störkörper zeigt hierbei der deltaförmige Störkörper besonders gute Eigenschaften. Andere Formen von Störkörpern, welche versuchen, die Vorteile beider Geometrien zu vereinen, sind meist deutlich komplizierter gestaltet und somit in der Praxis wesentlich aufwendiger im Fertigungsprozess.

Die alleinige Reduzierung des Druckverlustes bei der Durchströmung des Strömungsmessers führt jedoch nicht zwangsläufig zu einer höheren Effizienz bei der Messwertaufnahme. Wünschenswert ist ein hoher Spannungspegel bei insgesamt geringem Druckverlust.

Die JP 2004 191 173 A D1 zeigt einen Strömungsmesser zur Messung der Fließgeschwindigkeit eines Fluids mit einem Messrohr, das einen mit dem Fluid durchströmbaren Messraum bildet und mit wenigstens einem Störkörper, der im Messraum angeordnet ist und wobei im Messraum stromabwärts des Störkörpers weiterhin ein Messwertaufnehmer angeordnet ist, der aufgrund einer Wirbelbildung am Störkörper bei Umströmung mit dem Fluid auslenkbar ist, wobei das Messrohr wenigstens im Bereich der Anordnung des Störkörpers einen elliptischen Querschnitt mit einer längeren Hauptachse und einer kürzeren Nebenachse aufweist. Die Nebenachse der Ellipse ist kleiner als der Durchmesser vor dem elliptischen Querschnitt, jedoch ist auch die Hauptachse der Ellipse kleiner ist als der Kreisquerschnitt des Fluideingangs bzw. des Fluidausgangs des Messrohres.

### OFFENBARUNG DER ERFINDUNG

Aufgabe der Erfindung ist die weitere Verbesserung eines Strömungsmessers zur Messung der Fließgeschwindigkeit eines Fluids, wobei das Ziel erreicht wird, durch geometrische Optimierung des Strömungsquerschnitts im Messrohr ein möglichst hohes Verhältnis aus dem Spannungspotenzial des Messwertaufnehmers zum Druckverlust des strömenden Fluids im Messrohr zu erzielen.

Diese Aufgabe wird ausgehend von einem Strömungsmesser gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Kreisquerschnitt des Fluideingangs und/oder des Fluidausgangs ein Durchmessermaß aufweist, das der Länge der Hauptachse des elliptischen Querschnittes entspricht, sodass die Breite des Messraumes quer zur Störkörperachse vom Fluideingang bis zum Fluidausgang konstant bleibt.

Durch eine vorteilhaft gewählte Ellipsenform des Querschnittes des Messrohre wenigstens im Bereich der Anordnung des Störkörpers kann gezielt das Verhältnis von nutzbarem Messsignal zum Druckverlust verbessert werden, und maximiert somit die Effizienz des Strömungsmessers.

Die elliptische Form des Messraumes entlang der Strömungsachse weist damit erfindungsgemäß der Querschnitt des Fluideingangs und/oder des Fluidausgangs ein Durchmessermaß auf, das der Länge der Hauptachse des elliptischen Querschnitts entspricht. Dadurch bleibt die Breite des Messraumes quer zur Strömungsachse vom Fluideingang bis zum Fluidausgang konstant. Durch die Bildung des erfindungsgemäßen elliptischen Querschnitts im Bereich der Anordnung des Störkörpers innerhalb des Messrohres verengt sich der Querschnitt des Messrohres lediglich in der Störkörperachsrichtung, während der Querschnitt in Richtung der Hauptachse unverändert bleibt und dem Durchmesser des Kreisquerschnittes des Fluideingangs und/oder des Fluidausgangs entspricht.

Die Ellipsenform des Querschnittes des Messrohres kann genau in der Ebene der Anordnung des Störkörpers und in einem angrenzenden Bereich vor und hinter dem Störkörper vorliegen, beispielsweise in einem Bereich zwischen 10% bis 20%, zwischen 20% und 30%, zwischen 30% und 40%, zwischen 40% und 50%, zwischen 50% und 60%, zwischen 60% und 70% und/oder zwischen 70% und 80% bezogen auf die Gesamtlänge des Messrohres bzw. bezogen auf die Länge zwischen dem Störkörper und dem Fluideingang oder dem Fluidausgang des Messrohres.

Durch die liegende Ellipsenform in Bezug auf die stehende Störkörperachse des Störkörpers wird entlang einer Hauptachse der Ellipse ein durchgehend breiter Bereich in Breitenrichtung bereitgestellt, in dem sich die Wirbel seitlich vom Störkörper räumlich gut ausbilden können, während über die Nebenachse der Ellipse auf den Störkörper zulaufend eine Verengung und in Strömungsrichtung nach dem Störkörper wieder eine Aufweitung in der Höhenrichtung stattfindet. Damit erhöht sich die Strömungsgeschwindigkeit zur Anströmung des Störkörpers, und im Bereich des Störkörpers bildet die Strömungsgeschwindigkeit ein Maximum.

Es bilden sich dabei die Wirbel hauptsächlich im Bereich der Hauptachse der Ellipse, wodurch die Einwirkung der Druckschwankungen auf den Messwertaufnehmer und insofern auf dessen Auslenkung einen vorteilhaften Einfluss auf einen hohen Spannungspegel der Ausgabespannung des Messwertaufnehmers haben, während zugleich die Strömung beschleunigt wird, um auch damit eine Intensivierung der fluidischen Einwirkung auf den Messwertaufnehmer zu erhöhen. Im Ergebnis ergibt sich der positive Effekt aus einem bessern Verhältnis zwischen Messsignal des Messwertaufnehmers und dem Druckverlust.

Der Messraum des Messrohres erstreckt sich zwischen einem Fluideingang und einem Fluidausgang entlang einer Strömungsachse, wobei der Fluideingang einen Kreisquerschnitt aufweist, der entlang der Strömungsachse bis zur Position des Störkörpers hin verlaufend in den elliptischen Querschnitt übergeht. Insofern geht der elliptische Querschnitt von der Position des Störkörpers entlang der Störachse bis zum Fluidausgang hin in den Kreisquerschnitt über. Über der gesamten Länge ist der Messraum des Messrohres so geformt, dass der Messraum mit einem Kreisquerschnitt beginnt und mit einem Kreisquerschnitt endet, und insbesondere weist die Ellipsenform im Bereich des Störkörper ihr Maximum auf, was bedeutet, dass ein maximales Verhältnis zwischen der Hauptachse und der Nebenachse der Ellipse in der Position des Störkörpers vorliegt, welches Verhältnis mit zunehmendem Abstand vom Störkörper zum Fluideingang und vom Störkörper zum Fluidausgang abklingt.

Der Störkörper erstreckt sich in an sich bekannter Weise entlang einer Störkörperachse, wobei die Störkörperachse die Achse bildet, entlang der der Störkörper seinen Querschnitt vorzugsweise nicht ändert. Die Störkörperachse verläuft dabei senkrecht zur sich durch den Messraum erstreckenden Strömungsachse. Der Störkörper kann in Verbindung mit den erfindungsgemäßen Merkmalen einen runden, elliptischen, stromlinienförmigen, trapezförmigen oder dreieckförmigen Querschnitt aufweisen.

Der elliptische Querschnitt ist durch eine längere Hauptachse und eine quer zur Hauptachse verlaufenden kürzere Nebenachse aufgespannt. Die Ausrichtung von Hauptachse und Nebenachse ist dabei so vorgesehen, dass die Nebenachse gemeinsam mit der Störkörperachse zusammenfällt. Daraus ergibt sich der Vorteil, dass die quer dazu verlaufende Hauptachse einen breiteren Raum seitlich neben dem Störkörper bildet, indem sich die Wirbel ausbilden können, und die Wirbel können verbessert stromabwärts wandern, um auf den Messwertaufnehmer einzuwirken.

Insbesondere ist vorgesehen, dass das Längenverhältnis aus der Hauptachse zur Nebenachse einen Wert von 1,1 bis 2,0, bevorzugt von 1,25 bis 1,8 und besonders bevorzugt von 1,3 bis 1,6 aufweist. Insbesondere weist das Zahlenverhältnis der Länge der Hauptachse zur Angriffsfläche des Störkörpers einen Wert von 0,15 bis 0,6, bevorzugt von 0,2 bis 0,5 und besonders bevorzugt von 0,25 bis 0,45 auf.

Der Messwertaufnehmer ist in einem Abschnitt entlang der Strömungsachse im Messraum angeordnet, indem der Querschnitt des Messraumes einen elliptischen Querschnitt aufweist, der allerdings in Richtung zum Fluidausgang wieder in den Kreisquerschnitt übergeht. Das Verhältnis zwischen Hauptachse und Nebenachse des elliptischen Querschnittes ist insofern im Bereich der Anordnung des Messwertaufnehmers geringfügig kleiner als im Bereich des Störkörpers.

Mit noch weiterem Vorteil ist stromaufwärts des Störkörpers an einer dem Messraum begrenzenden Innenwand wenigstens ein in den Messraum hinein ragender Vorsprung ausgebildet. Dadurch wird der Effekt einer Wirbelverstärkung erreicht, sodass auch bereits bei niedrigen Strömungsgeschwindigkeiten des Fluids im Messrohr ein hoher Pegel der Ausgangsspannung des Messwertaufnehmers erreicht werden kann. Als Ursache für diesen Effekt kann angenommen werden, dass die Anordnung wenigstens eines und vorzugsweise von zwei sich gegenüberliegenden Vorsprungs stromaufwärts des Störkörpers Vorturbulenzen am Vorsprung erzeugt, und die am Vorsprung erzeugten Turbulenzen lösen sich vom Vorsprung ab und können die am Störkörper erzeugten Wirbel in einer sich ausbildenden Karmann'schen Wirbelstraße verstärken. Im Ergebnis ergibt sich eine stärkere Beaufschlagung des Messwertaufnehmers durch die periodisch sich am Störkörper ablösenden, verstärkten Wirbel. Besonders vorteilhaft ist es, wenn zwei sich diametral gegenüber liegende Vorsprünge an der Innenwand des Messrohres im Bereich des Fluideingangs vorliegen, bei denen eine über die Vorsprünge definierte Diametrale parallel zur Hauptachse des elliptischen Querschnittes liegt.

Unter stromabwärts und stromaufwärts ist vorliegend zu verstehen, dass unter der Angabe stromabwärts die Richtung mit der Strömungsachse zum Fluidausgang hin und stromaufwärts die Richtung entgegen der Strömungsachse zum Fluideingang hin verstanden wird.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine quergeschnittene Ansicht des Strömungsmessers mit einem Messraum, der die erfindungsgemäße geometrische Gestalt aufweist,
- Figur 2: eine quergeschnittene Ansicht des Strömungsmessers mit einer Querschnittsebene, die 90° gedreht ist zur Querschnittsebene des Querschnittes gemäß Figur 1,
- Figur 3a: eine erste vorteilhafte Querschnittsgeometrie des Störkörpers,
- Figur 3b: eine zweite vorteilhafte Querschnittsgeometrie des Störkörpers,
- Figur 4: eine Ansicht des Strömungsmessers mit einem Blick in den Messraum aus der Strömungsachse gesehen,
- Figur 5: eine schematisierte Darstellung des Störkörpers mit verschieden Querschnittsgeometrien des Messraumes,
- Figur 6: eine schematische Ansicht einer Wirbelbildung am Störkörper und
- Figur 7: eine abgewandelte Ausführungsform des Messrohres des Strömungsmessers mit einem Hüllrohr und mit einem Rohreinsatz,
- Figur 8: ein Diagramm der Differenz in Prozent der Messspannungen mit einem elliptischen Strömungsquerschnitt zu einem kreisrunden Strömungsquerschnitt, jeweils normiert auf die entstehende Druckdifferenz, und
- Figur 9: ein Diagramm der Messspannungen über der Druckdifferenz beim Durchströmen des Messraumes von Eingang bis zum Ausgang bei einem elliptischen Strömungsquerschnitt zu einem kreisrunden Strömungsquerschnitt.

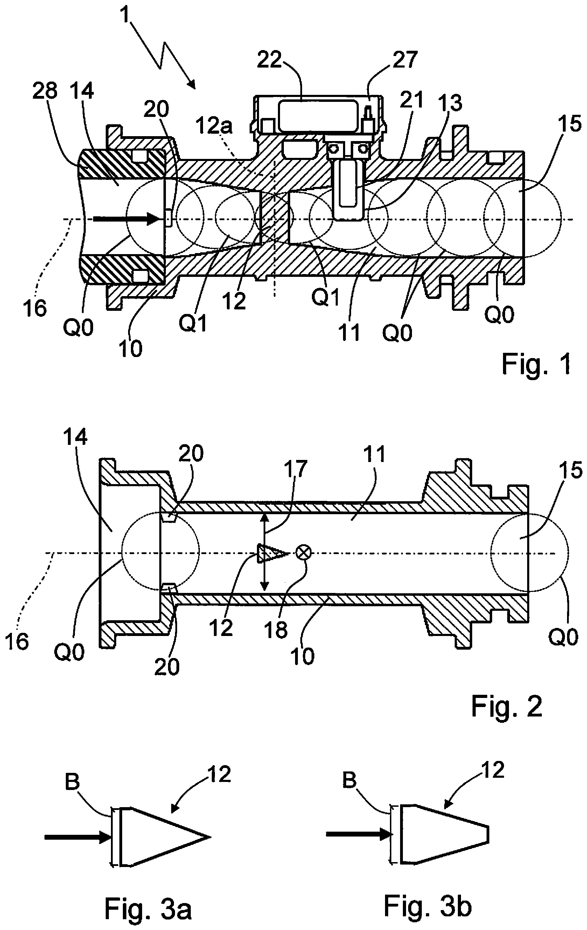

In Figur 1 ist eine Querschnittsansicht des Strömungsmessers 1 dargestellt, und der Strömungsmesser 1 ist von links nach rechts entlang der Strömungsachse 16 gemäß dem dargestellten Pfeil geschnitten dargestellt und durchströmbar. Der Strömungsmesser 1 dient zur Bestimmung einer Durchflussmenge pro Zeit, die durch das Messrohr 10 des Strömungsmessers 1 hindurchströmt. Der durchströmbare Bereich des Messrohres 10 ist als Messraum 11 bezeichnet, und im Messraum 11 und damit im Strömungsbereich des Fluides befindet sich ein Störkörper 12 und ein stromabwärts angeordneter Messwertaufnehmer 13. Der Störkörper 12 befindet sich in Bezug auf die Strömungsachse 16 stromaufwärts vor dem Messwertaufnehmer 13, und durch die Anströmung des Störkörpers 12 werden an diesem sich periodisch ablösende Wirbel gebildet, die zu einer Auslenkung des Messwertaufnehmers 13 in einer Auslenkungsrichtung quer zur Strömungsachse 16 führen. Die Auslenkung des Messwertaufnehmers 13 erfolgt dabei ebenfalls periodisch, wodurch ein Messsignal abgeleitet werden kann, indem in Verbindung mit dem Messwertaufnehmer 13 ein Messelement 21 angeordnet ist, das mit der Messelektronik 22 ausgebildet werden kann. Das Messelement 21 ist vorzugsweise als Piezoelement ausgestaltet.

Der Störkörper 12 erstreckt sich entlang einer Störkörperachse 12a, die quer zur Strömungsachse 16 verläuft. Parallel, aber stromabwärts zur Störkörperachse 12a erstreckt sich der Messwertaufnehmer 13, der schwertartig in den Messraum 11 hineinragt und unterhalb der Messelektronik 22 angeordnet ist, die außenseitig am Messrohr 10 in einer Messelektronikaufnahme 27 aufgenommen ist.

Das Messrohr 10 erstreckt sich von einem Fluideingang 14 bis zu einem Fluidausgang 15, wobei im Fluideingang 14 ein Anschlussstutzen 28 gezeigt ist.

Erfindungsgemäß weist der Querschnitt des Messrohres 10 im Bereich der Anordnung des Störkörpers 12 einen elliptischen Querschnitt Q1 auf. Hingegen besitzt das Messrohr 10 einen Querschnitt im Bereich des Fluideingangs 14 und im Bereich des Fluidausgangs 15, der gemäß einem Kreisquerschnitt Q0 gestaltet ist. Der Querschnitt des Messraumes 11 entlang der Strömungsachse 16 verändert sich folglich beginnend mit einem Kreisquerschnitt Q0 im Fluideingang 14 bis hin zu einem elliptischen Querschnitt Q1 im Bereich der Anordnung des Störkörpers 12 und geht im weiteren Verlauf stromabwärts entlang der Strömungsachse 16 wieder in einen Kreisquerschnitt Q0 am Fluidausgang 15 über. Der Kreisquerschnitt Q0 bildet sich erst nach Anordnung des Messwertaufnehmers 13 wieder zurück, wobei nur beispielshaft stromabwärts ein längerer Bereich entlang der Strömungsachse 16 den Kreisquerschnitt Q0 aufweist als vor der Anordnung des Störkörpers 12, was auch umgekehrt vorgesehen sein kann. Die Querschnitte Q0 und Q1 sind zur Visualisierung um eine Hochachse 90° in die Schnittebene gedreht.

Die Ellipsenform des elliptischen Querschnittes Q1 ist mit Bezug auf die Erstreckungsrichtung der Störkörperachse 12a liegend ausgestaltet, wobei die längere Hauptachse des elliptischen Querschnittes Q1 dem Durchmesser des Kreisquerschnitts Q0 entspricht.

Zur Optimierung der Wirbelbildung sind stromaufwärts des Störkörpers 12 an einer den Messraum 11 begrenzenden Innenwand 19 zwei in den Messraum 11 hinein ragende Vorsprünge 20 ausgebildet. Dadurch können die Wirbel, die sich am Störkörper 12 bilden, verstärkt werden, sodass bei insgesamt niedrigem Druckverlust ein vergleichsweise hoher Spannungspegel über den Messwertaufnehmer ausgegeben werden kann.

Folglich ändert sich die Breite des Messrohres 10 auf der halben Ebene zwischen dem Fluideingang 14 und dem Fluidausgang 15 nicht, wie die 90° gedrehte Querschnittsform in Figur 2 zeigt. Daraus ergibt sich, dass die Hauptachse 17 des elliptischen Querschnitts dem Durchmesser des Kreisquerschnitts Q0 entspricht, sodass die Darstellung in Fig. 2 einen Messraum 11 im Messrohr 10 zeigt, der sich vom Fluideingang 14 bis zum Fluidausgang 15 in der Breite nicht ändert. Die Darstellung zeigt insbesondere auch, dass zwei diametral gegenüberliegenden Vorsprünge 20 an der Innenwald 19 des Messraumes 11 angeordnet sind, die sich so gegenüberstehen, dass diese entlang der Hauptachse 17 des elliptischen Querschnittes Q1 an deren Außenseiten positioniert sind, wobei die Vorsprünge 20 noch vor dem elliptischen Querschnitt Q1 im Bereich des Kreisquerschnittes Q0 auf der Höhe des Fluideinganges 14 vorgesehen sind.

Figur 3a zeigt eine mögliche Querschnittsform eines Störkörpers 12, die im Wesentlichen einer Dreiecksform entspricht, wobei der Grundabschnitt des Dreieckes der Querschnittsform einen rechteckigen Ansatz aufweist, der entgegengesetzt zur Strömung zeigt und insofern bei Gebrauch des Strömungsmessers 1 direkt angeströmt wird. Quer von diesem rechteckigen Ansatz gemessen, weist der Störkörper 12 eine Breite B auf, die sich mit Bezug auf die Einbaulage des Störkörpers 12 im Messraum 11 in der gleichen Richtung erstreckt wie die Hauptachse 17 des elliptischen Querschnittes Q1.

Figur 3b zeigt eine weitere mögliche Form eines Störkörpers 12 mit einem trapezförmigen Querschnitt, wobei dieser ebenfalls einen rechteckigen Sockelabschnitt aufweist.

Die Störkörper 12 in den Figuren 3a und 3b werden gemäß dem dargestellten Pfeil angeströmt, sodass die breite, plane Vorderseite der Dreiecksform und der Trapezform entgegengesetzt zur Strömung weist.

Insbesondere die in den Figuren 3a und 3b dargestellten Querschnittsformen des Störkörpers 12 können besonders vorteilhaft in Verbindung mit dem erfindungsgemäß ausgeformten Messraum 11 im Messrohr 10 eingesetzt werden.

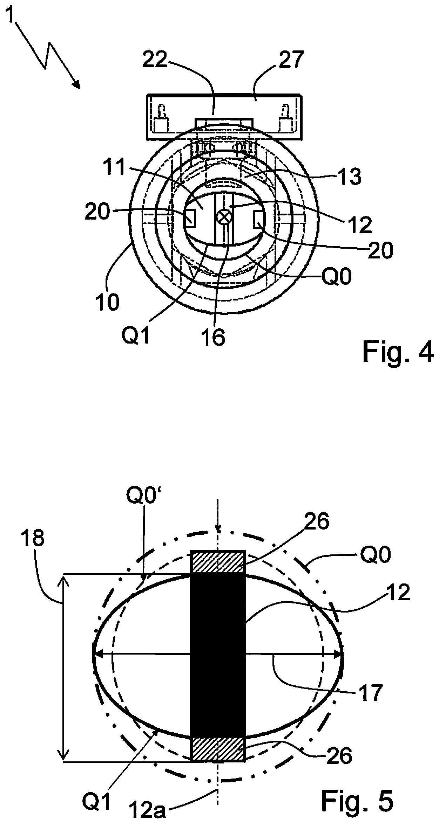

Figur 4 zeigt eine Ansicht des Strömungsmessers 1 aus der Richtung der Strömungsachse 16, sodass in den Messraum 11 des Messrohres 10 hineingeblickt werden kann. Die Ansicht zeigt vorderseitig den Kreisquerschnitt Q0, in den hinein auch die zwei diametral gegenüberliegenden Vorsprünge 20 an der Innenwald 19 des Messraumes 11 ragen, wobei der Kreisquerschnitt Q0 im Bereich des Störkörpers 12 übergeht in den elliptischen Querschnitt Q1. Oberseitig ist der Messwertaufnehmer 13 dargestellt, der mit der Messelektronik 22 in Verbindung steht, die in der Messelektronikaufnahme 27 außenseitig am Messrohr 10 aufgenommen ist. Die Darstellung verdeutlicht noch einmal die liegende Anordnung der Ellipse des elliptischen Querschnitts Q1, wie in Verbindung mit der nachfolgenden Figur 5 näher erläutert.

Figur 5 zeigt in einer schematischen Ansicht den sich ändernden Querschnitt, wobei beginnend mit dem Kreisquerschnitt Q0 der Querschnitt sich verändert und in den elliptischen Querschnitt Q1 im Bereich des Störkörpers 12 übergeht. Die Ellipse des elliptischen Querschnittes Q1 weist eine Hauptachse 17 auf, die liegend ausgebildet ist, sodass die Hauptachse 17 und die Störkörperachse 12a senkrecht aufeinander stehen. Hingegen verläuft die Nebenachse 18 der Ellipse des elliptischen Querschnittes Q1 gemeinsam mit der Störkörperachse 12a in vertikaler Richtung gemäß der Darstellung.

Die Ellipse wird gebildet durch die längere Hauptachse 17 und die kürzere Nebenachse 18, wobei die Länge der Hauptachse 17 dem Durchmesser des Kreisquerschnittes Q0 entspricht.

Würde das Messrohr 10 einen Kreisquerschnitt beibehalten, der bis in die Position des Störkörpers 12 einen sich verringernden Querschnitt aufweist, so ergäbe sich der Vergleichs-Kreisquerschnitt Q0'. Dabei wird deutlich, dass seitlich vom Störkörper 12, wo sich die Wirbel ausbilden sollen, der Bereich verkürzt ist, da der Durchmesser des verjüngten Kreisquerschnittes kleiner ist als die Hauptachse 17, die unverändert dem Maß des Durchmessers des Kreisquerschnittes Q0 entspricht. Hingegen sorgt die verkürzte Nebenachse 18 für eine Einkürzung 26 des Störkörpers 12 entlang der Störkörperachse 12a, wobei diese Einkürzung 26 keinen nennenswerten Einfluss auf den erreichbaren Spannungspegel hat, der mit dem Messwertaufnehmer 13 ausgebbar ist, jedoch den Druckverlust reduziert.

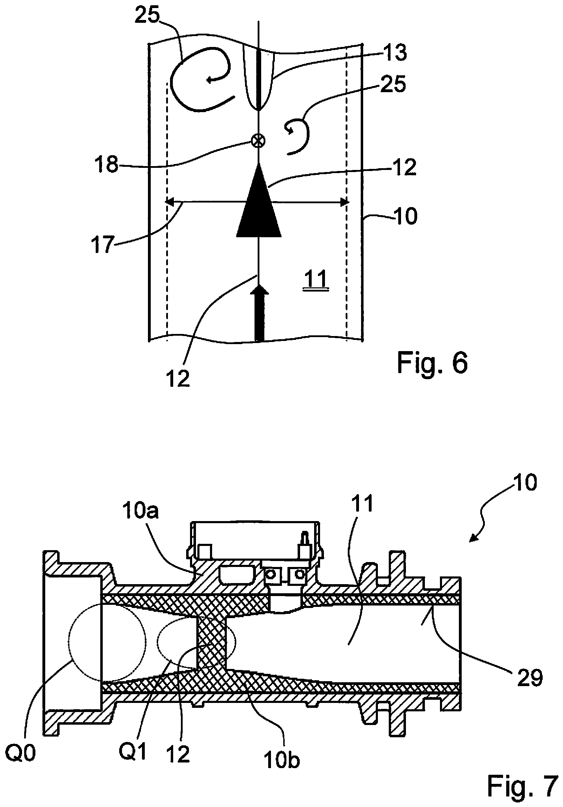

Figur 6 zeigt schematisch einen Abschnitt des Messrohres 10 mit dem innenseitigen Messraum 11 im Bereich der Anordnung des Störkörpers 12. Dargestellt ist die Strömungsachse 16 als Strömungspfeil und stromabwärts des Störkörpers 12 befindet sich der Messwertaufnehmer 13.

Am Störkörper 12 bilden sich Wirbel 25, die sich periodisch ablösen und seitlich vom Messwertaufnehmer 13 für Druckschwankungen sorgen, die den Messwertaufnehmer 13 auslenken, was schließlich vom Messelement 21 erfasst werden kann. Die Hauptachse 17 schafft durch ihre größere Länge dabei eine sehr große Weite auch im Bereich des Störkörpers 12, obwohl die senkrecht zur Bildebene stehende Nebenachse 18 des elliptischen Querschnittes Q1 eingekürzt ist. Durch den sich verringernden Strömungsquerschnitt wird die Strömung beschleunigt, wodurch die Wirbelbildung verstärkt wird, und wodurch eine höhere Messspannung am Messelement 21 auch bereits bei niedrigen Strömungsgeschwindigkeiten erzeugbar ist. Durch den aufgeweiteten Bereich des Messraums 11 im Bereich des Störkörpers 12 in Seitenrichtung, die der Hauptachse 17 des elliptischen Querschnittes Q1 entspricht, bleibt jedoch im Vergleich zum Kreisquerschnitt Q0' gemäß Figur 5 ein räumlich weiter Bereich bestehen, sodass sich die Wirbel 25 vorteilhaft ausbilden können.

Figur 7 zeigt eine abgewandelte Form des Messrohres 10 mit einem Hüllrohr 10a und mit einem Innenrohr 10b als Grundkörper des Strömungsmessers, wobei das Innenrohr 10b in das Hüllrohr 10a eingeschoben ist, sodass das Messrohr 10 gemäß dieser Variante zweiteilig ausgeführt ist.

Der Vorteil der zweiteiligen Ausführung ist insbesondere in der vereinfachten Herstellung des Messrohres 10 für hohe Drücke des Messfluides gegeben, da die elliptischen Querschnitte Q1 der Innenwandlung des Messraumes 11 ebenso wie der Störkörper 12 im Messraum 11 einteilig mit dem eigentlichen Innenrohr 10b vorteilhafterweise im Kunststoffspritzguss herstellbar sind, das Innenrohr 10b mit den komplexeren Geometrien mithin also aus Kunststoff im Spritzgussverfahren hergestellt werden kann, wobei die Komplexität der Geometrie für das Kunststoff- Spritzgussverfahren für das Innenrohr 10b im Vergleich zur spanenden Herstellung nachrangig ist.

Weiterhin von Vorteil ist aber auch die Herstellung des Hüllrohres 10a aus einem metallischen Werkstoff, sodass der Strömungsmesser für höhere bis sehr hohe Drücke des Messfluides ausgelegt werden kann. Auch ist es von Vorteil, dass beispielsweise der innere Durchgang 29 im Hüllrohr 10a auf einfache Weise einen durchgehenden Zylinderquerschnitt aufweisen und spanend hergestellt werden kann, beispielsweise mittels einem Bohrvorgang oder mittels eines Ausspindelns. Der Grundkörper des Hüllrohres 10a kann beispielsweise als ein Metall-Druckguss-Bauteil bereitgestellt oder als Drehteil aus einem entsprechend dimensionierten Zylinderkörper oder einer Zylinderhülse als Rohling gefertigt werden.

Der Außendurchmesser des Innenrohres 10b korrespondiert dabei mit dem Innendurchmesser des Hüllrohres 10a, sodass vorzugsweise eine Übergangspassung gebildet oder eine leichte Pressung hervorgerufen wird.

Der Vorteil, den Strömungsmesser für sehr hohe Drücke zu qualifizieren und die Herstellbarkeit zu vereinfachen, wird insbesondere damit erreicht, das Innenrohr 10b im Wesentlichen mit der gleichen Länge herzustellen wie auch die Länge des Hüllrohes 10a und/oder wobei das Hüllrohr 10a und das Innenrohr 10b abgesehen von kleinen Öffnungen oder dem Durchgang für den Messwertaufnehmer einen geschossenen, vollumfänglichen Querschnitt aufweisen, der für sich genommen druckdicht ist.

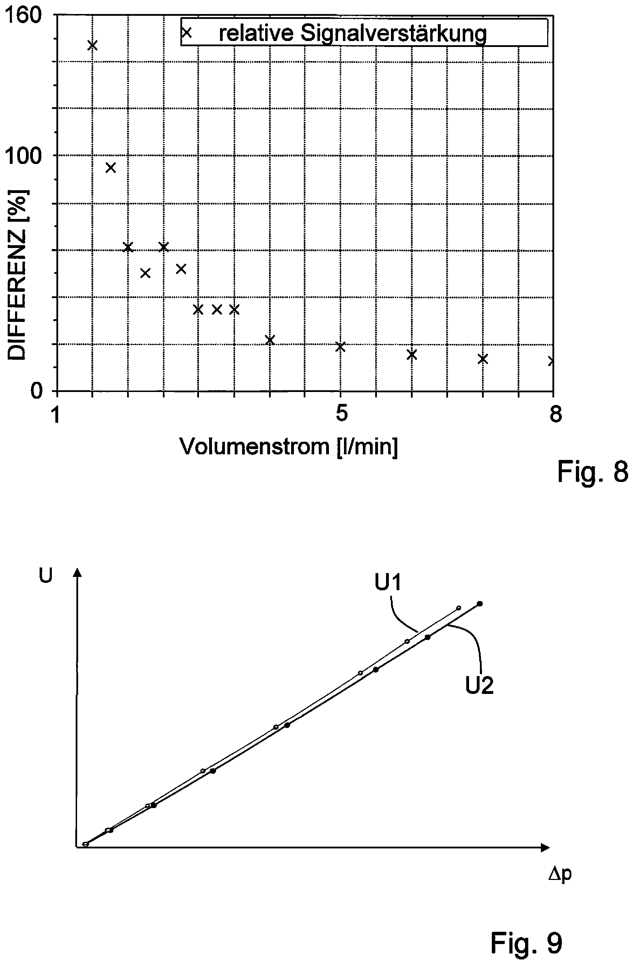

Figur 8 stellt in einem Diagramm die Differenz in Prozent der Messspannungen zwischen einem elliptischen Strömungsquerschnitt und einem kreisrunden Strömungsquerschnitt über dem Volumenstrom in Liter pro Minute dar, jeweils normiert auf die entstehende Druckdifferenz. Das Diagramm macht deutlich, dass die elliptische Ausbildung des Messraumes besonders bei niedrigen Strömungsgeschwindigkeiten eine starke Erhöhung des Messsignals im Vergleich zu dem Messsignal bei einem kreisrunden Querschnitt jeweils bezogen auf die Druckdifferenz ermöglicht.

Figur 9 zeigt schließlich ein Diagramm der Messspannung U über der Druckdifferenz Δp, gemessen vom Eingang bis zum Ausgang des Messrohres. Der Verlauf der Spannung U1 über den Druckverlust mit elliptischem Querschnitt gemäß der Erfindung ist, wie die Grafik zeigt, höher als die Spannung U2 über dem Druckverlust ohne die Ausgestaltung des elliptischen Querschnittes.

Im Rahmen der vorliegenden Erfindung umfasst der aufgeführte elliptische Querschnitt des Messraumes auch Querschnitte, die ellipsenartig ausgeführt sind, insofern also nicht zwingend einer mathematischen Ellipse entsprechen müssen. So kann auch ein rechteckiger Querschnitt mit als Radien oder gerundet ausgeführten Ecken oder mit planen Wandabschnitten im Bereich der Durchstoßpunkte der Haupt- und Nebenachsen durch die Innenwand des Messraumes im Sinne der Erfindung unter den beanspruchten elliptischen Querschnitt fallen.

### Bezugszeichenliste:

- 1: Strömungsmesser

- 10: Messrohr
- 10a: Hüllrohr
- 10b: Innenrohr
- 11: Messraum
- 12: Störkörper
- 12a: Störkörperachse
- 13: Messwertaufnehmer
- 14: Fluideingang
- 15: Fluidausgang
- 16: Strömungsachse
- 17: Hauptachse
- 18: Nebenachse
- 19: Innenwand
- 20: Vorsprung
- 21: Messelement
- 22: Messelektronik
- 23: Konus
- 24: Schattenbereich
- 25: Wirbel
- 26: Einkürzung
- 27: Messelektronikaufnahme
- 28: Anschlussstutzen
- 29: innerer Durchgang
- U: Messspannung
- U1: Spannung über Druckverlust mit Ellipse
- U2: Spannung über Druckverlust ohne Ellipse

- Δp: Druckdifferenz Eingang zu Ausgang
- Q1: elliptischer Querschnitt
- Q0: Kreisquerschnitt
- Q0': Vergleichs-Kreisquerschnitt
- B: Breite des Störkörpers

## Patentansprüche

1. Strömungsmesser (1) zur Messung der Fließgeschwindigkeit eines Fluids, mit einem Messrohr (10), das einen mit dem Fluid durchströmbaren Messraum (11) bildet und mit wenigstens einem Störkörper (12), der im Messraum (11) angeordnet ist und wobei im Messraum (11) stromabwärts des Störkörpers (12) weiterhin ein Messwertaufnehmer (13) angeordnet ist, der aufgrund einer Wirbelbildung am Störkörper (12) bei Umströmung mit dem Fluid auslenkbar ist, wobei das Messrohr (10) wenigstens im Bereich der Anordnung des Störkörpers (12) einen elliptischen Querschnitt (Q1) aufweist,
**dadurch gekennzeichnet,**
**dass** ein Kreisquerschnitt (Q0) eines Fluideingangs (14) und/oder eines Fluidausgangs (15) ein Durchmessermaß aufweist, das der Länge einer Hauptachse (17) des elliptischen Querschnittes (Q1) entspricht, sodass die Breite des Messraumes (11) quer zur Störkörperachse (12a) vom Fluideingang (14) bis zum Fluidausgang (15) konstant bleibt.

2. Strömungsmesser (1) nach Anspruch 1,
**dadurch gekennzeichnet,**
**dass** sich der Messraum (11) des Messrohres (10) zwischen dem Fluideingang (14) und dem Fluidausgang (15) entlang einer Strömungsachse (16) erstreckt, wobei der Fluideingang (14) den Kreisquerschnitt (Q0) aufweist, der entlang der Strömungsachse (16) bis zur Position des Störkörpers (12) hin verlaufend in den elliptischen Querschnitt (Q1) übergeht.

3. Strömungsmesser (1) nach Anspruch 1 oder 2,
**dadurch gekennzeichnet,**
**dass** der elliptische Querschnitt (Q1) von der Position des Störkörpers (12) entlang der Strömungsachse (16) bis zum Fluidausgang (15) in den Kreisquerschnitt (Q0) übergeht.

4. Strömungsmesser (1) nach einem der Ansprüche 1 bis 3,
**dadurch gekennzeichnet,**
**dass** der Störkörper (12) die Störkörperachse (12a) aufweist, entlang der sich der Störkörper (12) erstreckt, wobei die Störkörperachse (12a) senkrecht zur durch den Messraum (11) verlaufenden Strömungsachse (16) ausgerichtet ist, und/oder wobei der Störkörper (12) einen runden, elliptischen, stromlinienförmigen, trapezförmigen oder dreieckförmigen Querschnitt aufweist.

5. Strömungsmesser (1) nach Anspruch 4,
**dadurch gekennzeichnet,**
**dass** sich der elliptische Querschnitt (Q1) durch die längere Hauptachse (17) und eine quer zur Hauptachse (17) verlaufende kürzere Nebenachse (18) aufgespannt ist, wobei der elliptische Querschnitt (Q1) so ausgerichtet ist, dass die Nebenachse (18) mit der Störkörperachse (12a) zusammenfällt.

6. Strömungsmesser (1) nach einem der vorgenannten Ansprüche,
**dadurch gekennzeichnet,**
**dass** das Längenverhältnis aus der Hauptachse (17) zur Nebenachse (18) einen Wert von 1,1 bis 2,0, bevorzugt von 1,25 bis 1,8 und besonders bevorzugt von 1,3 bis 1,6 aufweist.

7. Strömungsmesser (1) nach einem der vorgenannten Ansprüche,
**dadurch gekennzeichnet,**
**dass** das Zahlenverhältnis der Länge der Hauptachse (17) zur Angriffsfläche des Störkörpers (12) einen Wert von 0,15 bis 0,6, bevorzugt von 0,2 bis 0,5 und besonders bevorzugt von 0,25 bis 0,45 aufweist.

8. Strömungsmesser (1) nach einem der vorgenannten Ansprüche,
**dadurch gekennzeichnet,**
**dass** der Messwertaufnehmer (13) in einem Abschnitt entlang der Strömungsachse (16) im Messraum (11) angeordnet ist, in dem der Querschnitt des Messraumes (11) einen elliptischen Querschnitt (Q1) aufweist und in Richtung zum Fluidausgang (14) in den Kreisquerschnitt (Q0) übergeht.

9. Strömungsmesser (1) nach einem der vorgenannten Ansprüche,
**dadurch gekennzeichnet,**
**dass** stromaufwärts des Störkörpers (12) an einer den Messraum (11) begrenzenden Innenwand (19) wenigstens ein in den Messraum (11) hineinragender Vorsprung (20) ausgebildet ist.

10. Strömungsmesser (1) nach einem der vorgenannten Ansprüche,
**dadurch gekennzeichnet,**
**dass** das Messrohr (10) mit einem Hüllrohr (10a) und mit einem Innenrohr (10b) ausgebildet ist, wobei das Innenrohr (10b) in das Hüllrohr (10a) eingeschoben ist

11. Strömungsmesser (1) nach Anspruch 10,
**dadurch gekennzeichnet,**
**dass** das Innenrohr (10b) und das Hüllrohr (10a) die gleiche Länge in der Strömungsachse (16) aufweisen und/oder dass das Innenrohr (10b) 70% bis 100% der Länge des Hüllrohres (10a) aufweist.

12. Strömungsmesser (1) nach Anspruch 10 oder 11,
**dadurch gekennzeichnet,**
**dass** das Innenrohr (10b) und/oder das Hüllrohr (10a) einen vollumfänglich geschlossenen Querschnitt aufweist.

13. Strömungsmesser (1) nach Anspruch 10 bis 12,
**dadurch gekennzeichnet,**
**dass** das Innenrohr (10b) einen Kunststoff aufweist und/oder dass das Hüllrohr (10a) ein Metall aufweist.

14. Strömungsmesser (1) nach Anspruch 10 bis 13,
**dadurch gekennzeichnet,**
**dass** das Innenrohr (10b) im Spritzgussverfahren hergestellt ist und/oder dass das Hüllrohr (10a) mittels eines spanenden Fertigungsverfahrens hergestellt ist.

## Claims

1. A flowmeter (1) for measuring the flow rate of a fluid having a measuring tube (10) that forms a measuring space (11) through which the fluid can flow and having at least one baffle (12) that is arranged in the measuring space (11) and wherein a measured value sensor (13) that is deflectable when flowed around by the fluid due to a vortex formation at the baffle (12) is furthermore arranged downstream of the baffle (12) in the measuring space (11), wherein the measuring tube (12) has an elliptical cross-section (Q1) at least in the region f the arrangement of the baffle (12),
**characterized in that**
a circular cross-section (Q1) of a fluid inlet (14) and/or of a fluid outlet (15) has a diameter measurement that corresponds to the length of a main axis (17) of the elliptical cross-section (Q1) so that the width of the measuring space (11) transversely to the baffle axis (12a) remains constant from the fluid inlet (14) up to the fluid outlet (15).

2. A flowmeter (1) in accordance with claim 1,
**characterized in that**
the measuring space (11) of the measuring tube (10) extends between the fluid inlet (14) and the fluid outlet (15) along a flow axis (16), with the fluid inlet (14) having the circular cross-section (Q0) that merges into the elliptical cross-section (Q1) along the flow axis (16) extending up to the position of the baffle (12).

3. A flowmeter (1) in accordance with claim 1 or claim 2,
**characterized in that**
the elliptical cross-section (Q1) merges into the circular cross-section (Q0) from the position of the baffle (12) along the flow axis (16) up to the fluid outlet (15).

4. A flowmeter (1) in accordance with one of the claims 1 to 3,
**characterized in that**
the baffle (12) has the baffle axis (12a) along which the baffle (12) extends, with the baffle axis (12a) being aligned perpendicular to the flow axis (16) extending through the measuring space (11) and/or with the baffle (12) having a round, elliptical, streamlined, trapezoidal, or triangular cross-section.

5. A flowmeter (1) in accordance with claim 4,
**characterized in that**
the elliptical cross-section (Q1) is spanned by the longer main axis (17) and a shorter secondary axis (18) extending transversely to the main axis (17), with the elliptical cross-section (Q1) being aligned such that the secondary axis (18) coincides with the baffle axis (12a).

6. A flowmeter (1) in accordance with one of the preceding claims,
**characterized in that**
the length ratio from the main axis (17) to the secondary axis (18) has a value from 1.1 to 2.0, preferably from 1.25 to 1.8, and particularly preferably from 1.3 to 1.6.

7. A flowmeter (1) in accordance with one of the preceding claims,
**characterized in that**
the ratio of the length of the main axis (17) to the surface of attack of the baffle (12) has a value from 0.15 to 0.6, preferably from 0.2 to 0.5, and particularly preferably from 0.25 to 0.45.

8. A flowmeter (1) in accordance with one of the preceding claims,
**characterized in that**
the measured value sensor (13) is arranged in a section along the flow axis (16) in the measuring space (11) in which the cross-section of the measuring space (11) has an elliptical cross-section (Q1) and merges into the circular cross-section in the direction toward the fluid outlet (14).

9. A flowmeter (1) in accordance with one of the preceding claims,
**characterized in that**
at least one projection (20) projecting into the measuring space (11) is formed downstream of the baffle (12) at an inner wall (19) bounding the measuring space (11).

10. A flowmeter (1) in accordance with one of the preceding claims,
**characterized in that**
the measuring tube (10) is formed with a sheath (10a) and with an inner tube (10b), with the inner tube (10b) being pushed into the sheath (10a).

11. A flowmeter (1) in accordance with claim 10,
**characterized in that**
the inner tube (10b) and the sheath (10a) have the same length in the flow axis (16); and/or **in that** the inner tube (10b) has 70% to 100% of the length of the sheath (10a).

12. A flowmeter (1) in accordance with claim 10 or claim 11,
**characterized in that**
the inner tube (10b) and/or the sheath (10a) has/have a fully circumferentially closed cross-section.

13. A flowmeter (1) in accordance with claims 10 to 12,
**characterized in that**
the inner tube (10b) comprises a plastic; and/or **in that** the sheath (10a) comprises a metal.

14. A flowmeter (1) in accordance with claims 10 to 13,
**characterized in that**
the inner tube (10b) is manufactured in an injection molding process; and/or **in that** the sheath (10a) is manufactured in a cutting production process.

## Revendications

1. Débitmètre (1) destiné à mesurer la vitesse d'écoulement d'un fluide, comportant un tube de mesure (10) qui forme un espace de mesure (11) pouvant être traversé par le fluide et comportant au moins un obstacle (12) qui est disposé dans l'espace de mesure (11), et dans lequel, dans l'espace de mesure (11) en aval de l'obstacle (12), est en outre disposé un capteur de mesure (13) qui peut être dévié en raison de la formation de tourbillons sur l'obstacle (12) lors de l'écoulement du fluide autour de celui-ci, le tube de mesure (10) présentant au moins dans la zone dans laquelle est disposé l'obstacle (12) une section transversale elliptique (Q1),
**caractérisé en ce que**
une section transversale circulaire (Q0) d'une entrée de fluide (14) et/ou d'une sortie de fluide (15) présente une dimension de diamètre qui correspond à la longueur d'un axe principal (17) de la section transversale elliptique (Q1), de telle sorte que la largeur de l'espace de mesure (11) transversalement à l'axe d'obstacle (12a) reste constante de l'entrée de fluide (14) à la sortie de fluide (15).

2. Débitmètre (1) selon la revendication 1,
**caractérisé en ce que**
l'espace de mesure (11) du tube de mesure (10) s'étend entre l'entrée de fluide (14) et la sortie de fluide (15) le long d'un axe d'écoulement (16), l'entrée de fluide (14) présentant la section transversale circulaire (Q0) qui se transforme en section transversale elliptique (Q1) en s'étendant le long de l'axe d'écoulement (16) jusqu'à la position de l'obstacle (12).

3. Débitmètre (1) selon la revendication 1 ou 2,
**caractérisé en ce que**
la section transversale elliptique (Q1) se transforme en section transversale circulaire (Q0) depuis la position de l'obstacle (12) jusqu'à la sortie de fluide (15) le long de l'axe d'écoulement (16).

4. Débitmètre (1) selon l'une des revendications 1 à 3,
**caractérisé en ce que**
l'obstacle (12) présente l'axe d'obstacle (12a) le long duquel s'étend l'obstacle (12), l'axe d'obstacle (12a) étant orienté perpendiculairement à l'axe d'écoulement (16) s'étendant à travers l'espace de mesure (11), et/ou l'obstacle (12) présentant une section transversale ronde, elliptique, carénée, trapézoïdale ou triangulaire.

5. Débitmètre (1) selon la revendication 4,
**caractérisé en ce que**
la section transversale elliptique (Q1) est définie par l'axe principal (17) plus grand et un axe secondaire (18) plus petit s'étendant transversalement à l'axe principal (17), la section transversale elliptique (Q1) étant orientée de telle manière que l'axe secondaire (18) et l'axe d'obstacle (12a) coïncident.

6. Débitmètre (1) selon l'une des revendications précédentes,
**caractérisé en ce que**
le rapport de longueur entre l'axe principal (17) et l'axe secondaire (18) présente une valeur de 1,1 à 2,0, de préférence de 1,25 à 1,8 et de manière particulièrement préférée de 1,3 à 1,6.

7. Débitmètre (1) selon l'une des revendications précédentes,
**caractérisé en ce que**
le rapport numérique entre la longueur de l'axe principal (17) et la surface effective de l'obstacle (12) présente une valeur de 0,15 à 0,6, de préférence de 0,2 à 0,5 et de manière particulièrement préférée de 0,25 à 0,45.

8. Débitmètre (1) selon l'une des revendications précédentes,
**caractérisé en ce que**
le capteur de mesure (13) est disposé dans l'espace de mesure (11) dans une partie située le long de l'axe d'écoulement (16) dans laquelle la section transversale de l'espace de mesure (11) présente une section transversale elliptique (Q1) et se transforme en section transversale circulaire (Q0) en direction de la sortie de fluide (14).

9. Débitmètre (1) selon l'une des revendications précédentes,
**caractérisé en ce que**
en amont de l'obstacle (12), au moins une saillie (20) dépassant dans l'espace de mesure (11) est formée sur une paroi intérieure (19) limitant l'espace de mesure (11).

10. Débitmètre (1) selon l'une des revendications précédentes,
**caractérisé en ce que**
le tube de mesure (10) est réalisé avec un tube de gainage (10a) et un tube intérieur (10b), le tube intérieur (10b) étant inséré dans le tube de gainage (10a).

11. Débitmètre (1) selon la revendication 10,
**caractérisé en ce que**
le tube intérieur (10b) et le tube de gainage (10a) présentent la même longueur dans l'axe d'écoulement (16) et/ou **en ce que** le tube intérieur (10b) présente une longueur comprise entre 70 % et 100 % de la longueur du tube de gainage (10a).

12. Débitmètre (1) selon la revendication 10 ou 11,
**caractérisé en ce que**
le tube intérieur (10b) et/ou le tube de gainage (10a) présentent une section transversale fermée sur toute la circonférence.

13. Débitmètre (1) selon les revendications 10 à 12,
**caractérisé en ce que**
le tube intérieur (10b) présente une matière plastique et/ou **en ce que** le tube de gainage (10a) présente un métal.

14. Débitmètre (1) selon les revendications 10 à 13,
**caractérisé en ce que**
le tube intérieur (10b) est fabriqué selon un procédé de moulage par injection et/ou **en ce que** le tube de gainage (10a) est fabriqué au moyen d'un procédé de fabrication par enlèvement de copeaux.
